# EUROPÄISCHE PATENTANMELDUNG

(11) **EP 2 053 426 A1**
(43) Veröffentlichungstag der Anmeldung: **29.04.2009**
(21) Anmeldenummer: 07020992.9
(22) Anmeldetag: 26.10.2007
(51) Int. Cl.: G01V 3/15, G01D 7/00

(54) **Anzeigeeinheit für einen Metalldetektor sowie Verfahren zur Verbesserung der Auflösung der Anzeigeskala und Metalldetektor**

(71) Anmelder: Vallon GmbH, 72800 Eningen (DE)
(72) Erfinder: Reinhardt, Horst, 72800 Ehningen (DE)
(74) Vertreter: Klocke, Peter

(57) **Zusammenfassung**

Die Erfindung betrifft eine Anzeigeeinheit (1) für einen Metalldetektor, mit mehreren aufeinander folgenden Leuchtmitteln (7) als Anzeigeskala (6), die in Abhängigkeit vom anzuzeigenden Messwert einzeln oder aufeinander folgende aufleuchten. Die Erfindung betrifft außerdem einen Metalldetektor mit einer derartigen Anzeigeeinheit. Unter Metalldetektoren werden in diesem Zusammenhang vorzugsweise Metall- und Eisendetektoren zur Lokalisierung von metallenen Störkörpern im Erdboden oder Gewässern verstanden. Die Anzeigeeinheit ermöglicht die Darstellung von ganzen oder Bruchteilen von Skalenteilen, in dem die Leuchtmittel mit variabler Lichtstärke und/oder veränderliche Lichtfarbe und/oder veränderlicher Blinkfrequenz betrieben werden.

## Beschreibung

Die Erfindung betrifft eine Anzeigeeinheit für einen Metalldetektor zum suchen von metallischen Gegenständen, mit mehreren aufeinander folgenden LeuchtMitteln als Anzeigeskala, die in Abhängigkeit vom anzuzeigenden Messwert oder Messsignal einzeln oder aufeinander folgend zur optischen Darstellung aufleuchten. Außerdem betrifft die Erfindung ein Verfahren zur Verbesserung der Auflösung der Anzeigeskala der Anzeigeeinheit und einen Metalldetektor mit einer derartigen Anzeigeeinheit. Unter Metalldetektoren werden in diesem Zusammenhang alle Arten von Detektoren verstanden, die zur Lokalisierung von im Erdboden oder Gewässern liegenden ferromagnetischen Störkörpern und/oder sonstigen metallischen Störkörpern dienen.

Metalldetektoren zum Auffinden von Gegenständen, vorzugsweise zum Lokalisieren von ferromagnetischen oder sonstigen metallischen Störkörpern im Erdboden oder in Gewässern sind an sich bekannt. Eisendetektoren beispielsweise nutzen lokale Verzerrungen des Erdmagnetfeldes, die durch ferromagnetische Störkörper verursacht werden, zu deren Ortung. Entsprechende Störkörper können dabei in Abhängigkeit von der Größe und dem magnetischen Zustandes bis in große Tiefen lokalisiert werden.

Derartige Detektoren weisen in der Regel mindestens eine Messsonde und eine Sondenelektronik auf, sowie eine Anzeigeeinheit zur Meldung von lokalen Veränderungen des Erdmagnetfeldes. Veränderungen werden bei solchen Detektoren dem Anwender üblicherweise mit einem akustischen Signal und/oder einem optischen Signal mitgeteilt. Die optische Darstellung eines Messsignals erfolgt dabei entweder durch ein Drehspulzeigerinstrument oder ein LED- bzw. LCD-Anzeigemodul.

Insbesondere bei Eisendetektoren, die eine Inhomogenität des magnetischen Erdfeldes anzeigen sollen, hat sich seit Jahren ein genaues Zeigerinstrument bewährt. Hierbei stört allerdings der Magnet des Drehspulwerkes erheblich die Justierung der in Gradientenanordnung montierten Magnetsensoren. Deshalb wird der magnetische Einfluss des Drehspulwerkes mit großem Aufwand für einen bestimmten Abstand neutralisiert oder das Zeigerinstrument durch ein LED- oder LCD-Anzeigemodul ersetzt. Leuchtmittelanzeigemodule haben aber gegenüber einem Zeigerinstrument zwei wesentliche Nachteile. Zum einen ist die Ablesbarkeit sehr stark von den Lichtverhältnissen abhängig und zum anderen sind die Auflösung der Anzeige und die Geschwindigkeit der Anzeigeänderung gegenüber einem Zeigerinstrument eingeschränkt. Bei einer LCD- als auch bei einer LED-Skala können in der Regel nur einzelne Skalenteile markiert werden. Ein Ablesen von Zwischenwerten der Skalenteile ist nicht möglich.

LED-Anzeigen weisen im Vergleich mit LCD-Anzeigen im Gebrauch deutliche Vorteile auf. Sie besitzen eine wesentlich schnellere Reaktionszeit, funktionieren im wesentlichen unabhängig von der Umgebungstemperatur und sind auch bei schwierigen Sichtverhältnissen meist besser ablesbar. Daher werden LED-Anzeigen für gattungsgemäße Metalldetektoren trotz des höheren Stromverbrauchs zunehmend bevorzugt eingesetzt. Dabei schränkt die Größe der gebräuchlichen Standard-LEDs, beispielsweise bei der Anordnung wie bei einem mechanischen Zeigerinstrument, die Auflösung der Anzeigeskala stark ein. Die neueste Anzeigetechnik benützt deshalb Mini-LEDs um die Auflösung von LED-Skalen zu verbessern. Durch den geringeren Platzbedarf gegenüber Standard-LEDs kann die Anzahl der LEDs über die Länge der Skala bei gleicher Skalenlänge vergrößert werden. Dies führt jedoch zu einer deutlichen Erhöhung der Herstellkosten, was unvorteilhaft und daher unerwünscht ist.

Der Erfindung liegt daher die Aufgabe zugrunde, eine Anzeigeeinheit, insbesondere für einen Metalldetektor vorzuschlagen, mit der die erwähnten Nachteile vermieden werden und eine genauere optische Anzeige über Leuchtmittel möglich ist.

Diese Aufgabe wird erfindungsgemäß durch eine Anzeigeeinheit mit den Merkmalen des Anspruchs 1, einem Metalldetektor mit den Merkmalen des nebengeordneten Anspruchs 6 und einem Verfahren mit den Merkmalen des nebenordneten Anspruchs 9 gelöst. Weitere vorteilhafte Ausführungsformen sind den jeweils rückbezogenen Unteransprüchen zu entnehmen.

Die erfindungsgemäße Anzeigeeinheit weist zur optischen Darstellung von erkannten Veränderungen des Erdmagnetfeldes eine Anzeigeskala aus mehreren aufeinander folgenden Leuchtmitteln auf. Dabei sind die Leuchtmittel mit variabler Lichtstärke und/oder veränderlicher Lichtfarbe und/oder veränderlicher Blinkfrequenz betrieben oder betreibbar. Vorteilhaft an der vorgeschlagenen Anzeigeeinheit ist, dass jedes Leuchtmittel den anzuzeigenden Messwert wesentlich genauer als herkömmlich betriebene Leuchtmittel anzeigt, da jedes Leuchtmittel durch entsprechende Ansteuerung mehrere Betriebszustände einnehmen kann. Den unterschiedlichen Betriebszuständen sind Bruchteile von Skalenwerten, also Zwischenwerte der Skaleneinteilung, beispielsweise halbe Skalenteile zugeordnet. Zur Anzeige solcher Skalenteile sind die Leuchtmittel, vorzugsweise Leuchtdioden, in mehreren Lichtstärkestufen und/oder Lichtfarben und/oder Blinkfrequenzen ansteuerbar.

Durch die verschiedenen Betriebszustände der Leuchtmittel wird die Auflösung der optischen Anzeigeeinheit deutlich erhöht, ohne zusätzliche Leuchtmittel vorzusehen. Zusätzliche Leuchtmittel sind im Hinblick auf die Größe und die Kosten der Anzeigeeinheit nicht immer ohne weiteres möglich. Durch die variable Ansteuerung der Leuchtmittel sind die zusätzlichen Kosten für eine genauere Anzeige gering. Dabei können die Leuchtmittel ähnlich wie bei einer Skala eines Zeigerinstruments bogenförmig oder geradlinig wie bei einem Bargraph angeordnet sein.

In einer vorteilhaften Ausführungsform der Erfindung sind ganze und/oder Bruchteile von Skalenteilen durch Steuerung der Lichtstärke und/oder der Lichtfarbe und/oder der Lichtfrequenz der Leuchtmittel darstellbar. Bei der Steuerung der Lichtstärke lässt sich eine wesentliche Verbesserung der digitalen Darstellung erreichen, in dem die Übergänge von einem Leuchtmittel zum nächsten Leuchtmittel durch eine zusätzliche Helligkeitssteuerung der einzelnen Leuchtmittel in ein analoges Anzeigeverhalten überführt werden. Eine Indikation von halben Skalenteilen kann beispielsweise durch die Leuchtstärke der entsprechenden Leuchtmittel erfolgen, indem der volle Wert durch hohe Leuchtstärke eines Leuchtmittels und ein Zwischenwert durch reduzierte Leuchtstärke dargestelit wird. Es ist auch denkbar zwei aufeinanderfolgende Leuchtmittel gleichzeitig anzusteuern, wobei das erste Leuchtmittel den vollen Skalenteil und das darauf folgende Leuchtmittel den entsprechenden Bruchteil des Messwertes anzeigt. Dieses analoge Anzeigeverhalten lässt sich nicht nur durch Unterschiede in der Helligkeit sondern auch in der Farbe bzw. mit der Blinkfrequenz der einzelnen Leuchtmittel erzeugen.

Die Ablesbarkeit von Leuchtmittelanzeigen ist stark von den Lichtverhältnissen in der Umgebung abhängig. Eine helle Anzeige belastet eine Batterie oder einen Akkumulator stark und verkürzt damit die Betriebsdauer des Metalldetektors. Zur Optimierung des Energieverbrauchs ist die maximale Lichtstärke bei der Darstellung von ganzen oder Bruchteilen von Skalenteilen manuell oder automatisch an die Lichtverhältnisse der Umgebung anpassbar. Dazu ist an der Anzeigeeinheit entweder ein Einstellknopf bzw. Einstelltasten oder ein Lichtsensor vorgesehen.

Zusätzlich zu der Anzeigeskala aus Leuchtmitteln kann die Anzeigeeinheit vorteilhafterweise eine numerische Digitalanzeige zur Darstellung des Messwertes in Ziffern aufweisen. Damit ist eine noch genauere Darstellung des Messwertes möglich und der Messwert einfacher und fehlerfrei ablesbar. Änderungen des Messwertes können jedoch bei der "analogen" Anzeigenskala einfacher und schneller wahrgenommen werden als bei der numerischen Anzeige. Außerdem sind bei der numerischen Darstellung Änderungstrends schwieriger zu erkennen.

Gemäß der Erfindung weist der erfindungsgemäße Metalldetektor eine Anzeigeeinheit mit den Merkmalen des Anspruchs 1 auf. Er ist insbesondere zum Suchen von metallischen Gegenständen, insbesondere im Erdboden oder in Gewässern vorgesehen, dazu weist er eine Elektronik auf, die einen Messwert ermittelt und zur optischen Anzeige an der Anzeigeeinheit bringt.

Vorteilhafterweise ist die Anzeigeeinheit, die vorzugsweise ein flaches Gehäuse aufweist, an der Messsonde,oder an einer Bedienkonsole, die mit der Messsonde verbunden ist, schwenkbar befestigt. Die Befestigung kann mittels einem KlappScharnier oder einem Kugelgelenk erfolgen, so dass die Anzeigeeinheit gegenüber der Messsonde um eine Befestigungsachse klappbar oder um einen Befestigungspunkt frei schwenkbar ist. Durch Ausrichten der Anzeigeeinheit kann damit die Ablesbarkeit bei schwierigen Lichtverhältnissen verbessert werden. Insbesondere kann die Neigung des Displays der Größe des Benutzers angepasst und dessen Neigungswinkel gegenüber störender Lichteinstrahlung verändert werden. Spiegelungen oder Blendungen sind somit ausgeschlossen, so dass der Benutzer ungehindert die Anzeigeeinheit beobachten und sowohl Größe des Ausschlags als auch Geschwindigkeit der Ausschlagsänderung problemlos erkennen kann. Dies ermöglicht ihm wiederum, die Größe und die Lage des erkannten, verborgenen metallischen Gegenstandes zu beurteilen.

In einer zweckmäßigen Ausführungsform der Erfindung ist die elektrische Verbindung zu dem Gehäuse der Anzeigeeinheit wasserdicht ausgebildet, wobei das Verbindungskabel im wesentlichen unsichtbar durch die Schwenkverbindung der Anzeigeeinheit geführt ist.

Gemäß der Erfindung werden bei vorgeschlagenen Verfahren zur Verbesserung der Auflösung einer Anzeigeeinheit für einen Metalldetektor, der zum Suchen von metallischen Gegenständen im Erdboden oder Gewässern vorgesehen ist, mit mehreren aufeinander folgenden Leuchtmitteln als Anzeigeskala, die in Abhängigkeit von einem anzuzeigenden Messwert einzeln oder aufeinander folgend zur optischen Darstellung aufleuchten, die Leuchtmittel mit variabler Lichtstärke und/oder veränderlicher Lichtfarbe und/oder veränderlicher Blinkfrequenz betrieben. Vorteilhafterweise werden dabei ganze oder Bruchteile von Skalenteilen durch Steuerung der Lichtstärke und/oder Lichtfarbe der Leuchtmittel dargestellt, wobei vorzugsweise als Leuchtmittel Leuchtdioden verwendet werden.

Nachfolgend wird die Erfindung anhand von zwei Ausführungsbeispielen näher erläutert. Weitere Merkmale der Erfindung ergeben sich aus den beigefügten zeichnungen und der Beschreibung der Ausführungsbeispiele in Verbindung mit den Ansprüchen Die einzelnen Merkmale der Erfindung können für sich allein oder zu mehreren bei verschiedenen Ausführungsformen der Erfindung realisiert sein. In einer schematischen Darstellung zeigen:
- Figur 1: Eine an der Messsonde klappbar gelagerte Anzeigeeinheit;
- Figur 2: Eine an der Messsonde frei schwenkbar gelagerte Anzeigeeinheit;
- Figur 3: eine vereinfacht als geradlinig dargestellte Anzeigeskala gemäß den Figuren 1, 2 mit verschiedenen Ansteuerarten für die Leuchtmitteln mit einem drittel Skalenteilung, und
- Figur 4: eine vereinfacht als geradlinig dargestellte Anzeigeskala gemäß den Figuren 1, 2 mit verschiedenen Ansteuerarten für die Leuchtmitteln mit einem fünftel Skalenteilung.

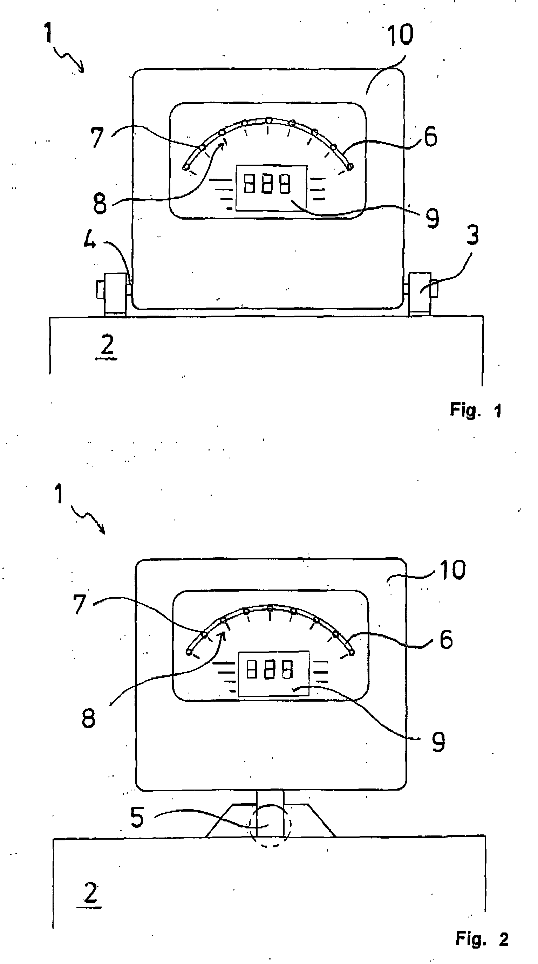

Die Figuren 1, 2 zeigen eine erfindungsgemäße Anzeigeeinheit 1, die an einer Messsonde 2 schwenkbar befestigt ist. Bei dem ersten Ausführungsbeispiel (Figur 1) weist die Anzeigeeinheit 1 ein Scharniergelenk 3 mit einer Schwenkachse 4 auf, um die die Anzeigeeinheit 1 klappbar ist. Das zweite Ausführungsbeispiel (Figur 2) zeigt ein Kugelgelenk 5 zwischen der Anzeigeeinheit 1 und der Messsonde 2, wodurch die Anzeigeeinheit 1 beliebig ausrichtbar ist.

Beide Ausführungsbeispiele zeigen in den Figuren 1, 2 eine Anzeigeskala 6 aus bogenförmig angeordneten LED-Leuchtmitteln 7, die aufeinander folgend mit geringem Abstand zueinander angeordnet sind. Die Leuchtmittel 7 sind, in der Anzeigeskala 6 nur andeutungsweise dargestellt. Die Anzeigeskala 6 weist neben den Leuchtmitteln 7 eine Skaleneinteilung 8 mit einer entsprechenden, in der Zeichnung nicht dargestellten Beschriftung auf. Die Anzeigeeinheit 1 weist Außerdem ein numerisches LED-Segmentanzeige-Modul 9 auf.

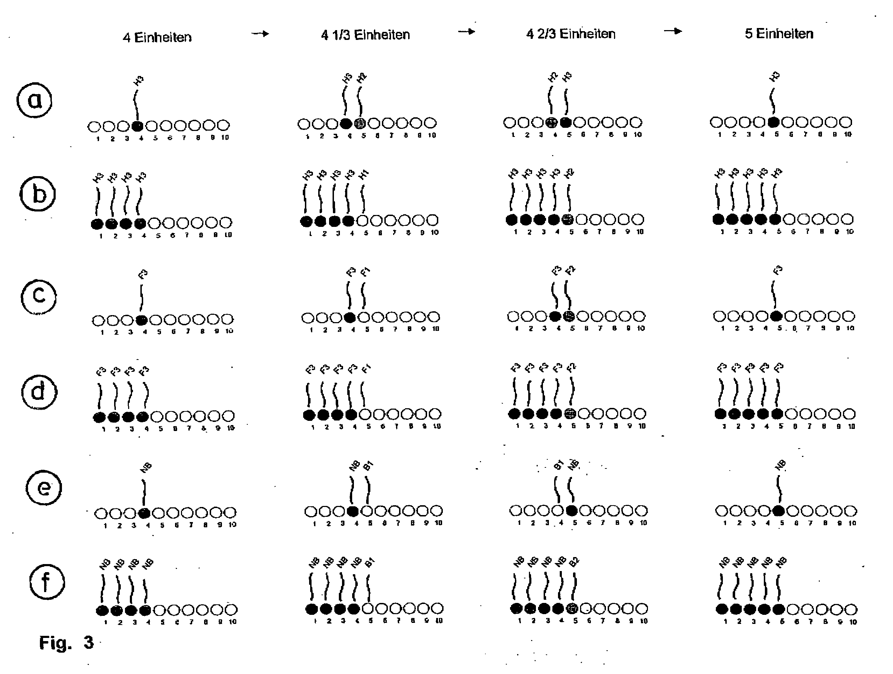

Die Figur 3 zeigt die Anzeigeskala 6 aus den Figuren 1,2 in vereinfachter Form und nur mit einer geringen Anzahl von Leuchtmitteln 7 in vergrößerter Darstellung Die in verschiedenen Ansteuerungsformen in den Figuren 3a - 3f gezeigten Leuchtmittel 7 sind zwecks besserer Übersichttichkeit nicht kreisförmig sondern geradlinig angeordnet. Dabei zeigen die Figuren 3a, 3b, eine helligkeitsgesteuerte, die Figuren 3c, 3d eine farbgesteuerte und die Figuren 3e, 3f eine frequenzgesteuerte Anzeigeskala 6. Dargestellt ist eine gegenüber dem Stand der Technik verbesserte Einzelpunktdarstellung für den Messwert in den Figuren 3a, 3c, 3e und eine entsprechend verbesserte Balkendarstellung in den Figuren 3b, 3d, 3f.

Figur 3 zeigt in den verschiedenen Darstellungen jeweils eine Anzeigeskala 6 aus zehn aufeinander folgenden Leuchtmitteln 7, die ohne Abstand aneinander anschließen. Die Leuchtmittel 7 sind als Leuchtdioden ausgeführt und mit variabler Lichtstärke und/oder veränderbarer Lichtfarbe und/oder veränderbarer Blinkfrequenz betreibbar bzw. betrieben. Mittels unterschiedlicher Ansteuerung sind ganze, halbe oder drittel oder andere Bruchteile von Skalenteilen durch Variation der Helligkeit und/oder der Farbe und/oder der Blinkfrequenz von einzelnen angesteuerten Leuchtdioden 7 darstellbar. In der weiteren Beschreibung einzelner Betriebsarten und Ansteuerungsvarianten der Anzeigeskala 6 werden die LEDs 7 von links beginnend durchgezählt. Dargestellt ist den einzelnen Figuren 3a - 3f jeweils ein von 4 Einheiten auf 5 Einheiten der Messskala 6 anwachsender Messwert mit einer Auflösung von einem Drittel eines Skalenteils in vier Stufen.

Bei der aus dem Stand der Technik bekannten digitalen Ansteuerung der Anzeigeskala 6, in der Figur 3 nicht dargestellt, würde in einem solchen Fall bei der Einzelpunktdarstellung bei 4, 4 1/3 und 4 2/3 Einheiten des Messwertes nur die vierte LED 7 und bei fünf Einheiten lediglich die fünfte LED 7 mit maximaler Lichtstärke leuchten. Bei der Balkendarstellung würden zusätzlich die erste, zweite und dritte LED 7 mit entsprechender maximaler Lichtstärke angesteuert. Die Auflösung beträgt demnach bei einer herkömmlichen Anzeigeeinheit jeweils ein Skalenteil.

Bei der in den Figuren 3a, 3b dargestellten Helligkeitssteuerung, bei der die LEDs 7 mit variabler Lichtstärke betrieben werden können, sind je drei Helligkeitstufen H1, H2 H3 vorgesehen. Die Helligkeitsstufen H1 - H3 sind jeweils einem Drittel eines Skalenteils zugeordnet Demnach entspricht H1 einem Drittel, H2 zwei Dritteln und H3 drei Dritteln einer Einheit der Messskala 6, wobei die Lichtstärke der Helligkeitsstufen vorzugsweise entsprechend der Wertigkeit zunehmend vorgesehen ist. Dabei kann die Lichtfarbe der LEDs 7 beliebig gewählt werden.

Bei der in der Figur 3a dargestellten Einzelpunktdarstellung leuchtet bei einem Messwert von 4 Einheiten die vierte LED 7 mit der maximalen Helligkeitsstufe H3. Beim Anwachsen des Messwertes um 1/3 einer Einheit leuchtet zusätzlich die fünfte LED 7 mit einer mittleren Lichtstärke H2. Bei einem Messwert von 4 2/3 wird die vierte LED 7 auf die zweite Helligkeitsstufe H2 mit der mittleren Lichtstärke umgeschaltet und die fünfte LED 7 mit maximaler Lichtstärke H3 betrieben. Sobald der Messwert fünf vollen Einheiten entspricht, erlischt die vierte LED 7, so dass jetzt nur noch die fünfte LED 7 mit der Lichtstärke H3 brennt.

Bei der in der Figur 3b dargestellten Balkendarstellung sind bei einem Messwert von 4 Einheiten die erste bis vierte LED 7 mit der maximalen Helligkeitsstufe H3 angesteuert. Beim Anwachsen des Messwertes um 1/3 einer Einheit leuchtet zusätzlich die fünfte LED 7 mit der geringen Lichtstärke H1 auf. Ab einem Messwert 4 2/3 wird die fünfte LED 7 von der geringen Helligkeitsstufe H1 auf die mittlere Helligkeitsstufe H2 umgeschaltet. Sobald der Messwert fünf vollen Einheiten entspricht, wird die Lichtstärke der fünften LED 7 nochmals erhöht, so dass ab da die erste bis fünfte LED7 mit der maximalen Helligkeitsstufe H3 leuchten.

Bei der in den Figuren 3c, 3d dargestellten Farbsteuerung, bei der die LEDs 7 der Anzeigeskala 6 mit unterschiedlichen Farben betrieben werden können, kann die Lichtfarbe der LEDs 7 zwischen den drei Farben F1, F2, F3 wechseln. Die Farben F1 bis F3 sind an sich beliebig wählbar, sofern sie auf dem Markt verfügbar sind; sie sind jeweils einem Drittel eines Skalenteils zugeordnet. Demnach entspricht F1 einem Drittel, F2 zwei Dritteln und F3 drei Dritteln einer Einheit der Messskala 6.

Bei der in der Figur 3c dargestellten Einzelpunktdarstellung leuchtet bei einem Messwert von 4 Einheiten lediglich die vierte LED 7 mit einer ersten Lichtfarbe F3. Bei einem Messwert von 4 1/3 einer Einheit leuchtet zusätzlich die fünfte LED 7 mit einer zweiten Lichtfarbe F1. Ab einem Messwert von 4 2/3 wird die fünfte LED 7 auf die dritte Lichtfarbe F2 umgeschaltet. Sobald der Messwert fünf vollen Einheiten der Messskala entspricht, wird die vierte LED 7 aus- und die fünfte LED 7 auf die Lichtfarbe F3 umgeschaltet. Dabei können die LEDs 7 mit beliebiger Lichtstärke betrieben werden.

Die in der Figur 3d dargestellten Balkendarstellung unterscheidet sich von der in der Figur 3c dargestellten Einzelpunktdarstellung lediglich dadurch, dass bei einem Messwert von 4 bis zu 4 2/3 Einheiten der Messskala 6 zusätzlich die erste bis dritte LED 7 mit der Lichtfarbe F3 leuchten und bei dem Messwert von 5 Einheiten die erste bis fünfte LED 7 mit der gleichen Farbe F3 betrieben sind.

Bei der in den Figuren 3e, 3f dargestellten Blinkfrequenzsteuerung, bei der die LEDs 7 der Anzeigeskala 6 mit unterschiedlichen Blinkfrequenzen betrieben werden können, kann die Anzeigefrequenz der LEDs 7 zwischen den Zuständen NB, B1 und B2 wechseln. Die Blinkfrequenzen B1, B2 sind an sich beliebig wählbar, sie sind jeweils einem Drittel eines Skalenteils zugeordnet. Der Zustand NB entspricht der Blinkfrequenz 0 einer ständig eingeschalteten LED 7. Dabei ist es zweckmäßig, die niedrigere Blinkfrequenz B1, einem Drittel und die höhere Blinkfrequenz B2 zwei Dritteln einer Skaleneinheit zuzuordnen.

Bei der in der Figur 3e dargestellten Einzelpunktdarstellung leuchtet bei einem Messwert von 4 Einheiten lediglich die vierte LED 7 mit der minimalen Blinkfrequenz NB. Bei einem Messwert von 4 1/3 einer Einheit blinkt zusätzlich die fünfte LED 7 mit einer zweiten Blinkfrequenz. B1. Ab einem Messwert von 4 2/3 wird die vierte LED 7 auf die Blinkfrequenz B1 und die fünfte LED 7 auf die Blinkfrequenz NB umgeschaltet. Sobald der Messwert fünf vollen Einheiten der Messskala entspricht, wird die vierte LED 7 ausgeschaltet. Dabei könnten die LEDs 7 mit beliebiger Blinkfrequenz betrieben werden.

Die in der Figur 3f dargestellten Balkendarstellung unterscheidet sich von der in der Figur 3e dargestellten Einzelpunktdarstellung lediglich dadurch, dass bei einem Messwert von 4 bis zu 4 2/3 Einheiten der Messskala 6 zusätzlich die erste bis dritte LED 7 mit der Blinkfrequenz NB leuchtet und bei dem Messwert von 5 Einheiten die erste bis fünfte LED 7 mit der gleichen Blinkfrequenz NB betrieben sind. Weiterhin wird bei einem Messwert von 4 1/3 Einheiten der Messskala 6 die fünfte LED 7 mit der Blinkfrequenz B1 und bei 4 2/3 Einheiten der Messskala 6 die fünfte LED 7 mit der Blinkfrequenz B2 angesteuert.

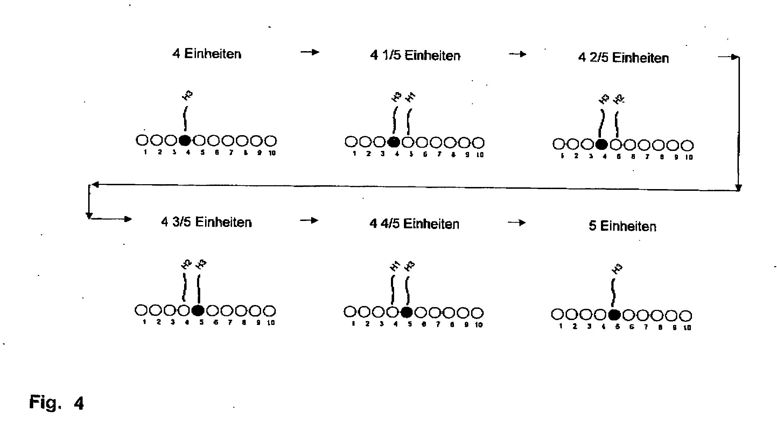

In der Figur 4 ist ein von 4 Einheiten auf 5 Einheiten der Messskala 6 anwachsender Messwert mit einer Auflösung von einem fünftel eines Skalenteils in sechs Stufen dargestellt. Gezeigt wird eine Helligkeitssteuerung. Bei der dargestellten Einzelpunktdarstellung leuchtet bei einem Messwert von 4 Einheiten die vierte LED 7 mit der maximalen Helligkeitsstufe H3. Beim Anwachsen des Messwertes um 1/5 einer Einheit leuchtet zusätzlich die fünfte LED 7 mit einer minimalen Lichtstärke H1. Bei einem Messwert von 4 2/5 wird die Lichtstärke der fünften LED 7 auf die zweite Helligkeitsstufe H2 umgeschaltet. Sobald der Messwert 4 3/5 Skalenteile erreicht, werden die Helligkeitsstufen der vierten und der fünften LED 7 vertauscht, so dass nunmehr die vierte LED 7 mit der Helligkeitsstufe H2 und die fünfte LED 7 mit der maximalen Helligkeitsstufe H3 betrieben wird. Sobald der Messwert 4 4/5 Skalenteilen entspricht wird die vierte LED 7 von der mittleren Helligkeitsstufe H2 auf die minimale Helligkeitsstufe H1 zurückgeschaltet. Bei einem Messwert, der fünf vollen Einheiten entspricht, erlischt die vierte LED 7, so dass jetzt nur noch die fünfte LED 7 mit der Lichtstärke H3 brennt.

## Patentansprüche

1. Anzeigeeinheit (1) für einen Metalldetektor, der zum Suchen von metallischen Gegenständen im Erdboden oder Gewässern vorgesehen ist, mit mehreren aufeinander folgenden Leuchtmitteln (7) als Anzeigeskala (6), die in Abhängigkeit von einem anzuzeigenden Messwert einzeln oder aufeinander folgend zur optischen Darstellung aufleuchten, **dadurch gekennzeichnet, dass** die Leuchtmittel (7) mit variabler Lichtstärke und/oder veränderlicher Lichtfarbe und/oder veränderlicher Blinkfrequenz betrieben oder betreibbar sind.

2. Anzeigeeinheit nach Anspruch 1 **dadurch gekennzeichnet, dass** ganze und/oder Bruchteile von Skalenteilen durch Steuerung der Lichtstärke und/oder Lichtfarbe und/oder Blinkfrequenz der Leuchtmittel (7) darstellbar sind.

3. Anzeigeeinheit nach Anspruch 1 oder 2, **dadurch gekennzeichnet, dass** als Leuchtmittel (7) Leuchtdioden verwendet sind.

4. Anzeigeeinheit nach einem der vorangegangenen Ansprüche, **dadurch gekennzeichnet, dass** die maximale Lichtstärke bei der Darstellung von ganzen oder Bruchteilen von Skalenteilen manuell oder automatisch an die Lichtverhältnisse der Umgebung, unabhängig vom gewählten Betrieb der Skalenteilansteuerung durch Lichtstärke und/oder Lichtfarbe und/oder Blinkfrequenz, anpassbar ist.

5. Anzeigeeinheit nach einem der vorangegangenen Ansprüche, **dadurch gekennzeichnet, dass** die Anzeigeeinheit (1) zusätzlich zu der Anzeigeskala (6) eine numerische Digitalanzeige (9) für die Messwerte aufweist.

6. Metalldetektor zum Suchen von verborgenen metallischen Gegenständen, insbesondere im Erdboden oder in Gewässern, mit einer Messsonde (2), und/oder einer Suchspule, die eine Elektronik aufweist, und mit einer Anzeigeeinheit (1) zur optischen Darstellung von ermittelten Messwerten, **gekennzeichnet durch** eine Anzeigeeinheit (1) mit den Merkmalen des Anspruchs 1.

7. Metalldetektor nach Anspruch 6, **dadurch gekennzeichnet, dass** die Anzeigeeinheit (1) ein flaches Gehäuse (10) aufweist, das an der Messsonde (2) oder einer mit der Messsonde (2) verbundenen Bedienkonsole des Metalldetektors schwenkbar befestigt ist.

8. Metalldetektor nach Anspruch 6 oder 7, **dadurch gekennzeichnet, dass** die elektrische Verbindung zu dem Gehäuse (10) der Anzeigeeinheit (1) wasserdicht ausgebildet ist, wobei das Verbindungskabel im wesentlichen unsichtbar durch die Schwenkverbindung der Anzeigeeinheit (1) geführt ist.

9. Verfahren zur Verbesserung der Auflösung einer Anzeigeeinheit (1) für einen Metalldetektor, der zum Suchen von metallischen Gegenständen im Erdboden oder Gewässern vorgesehen ist, mit mehreren aufeinander folgenden Leuchtmitteln (7) als Anzeigeskala (6), die in Abhängigkeit von einem anzuzeigenden Messwert einzeln oder aufeinander folgend zur optischen Darstellung aufleuchten, **dadurch gekennzeichnet, dass** die Leuchtmittel (7) mit variabler Lichtstärke und/oder veränderlicher Lichtfarbe und/oder veränderlicher Blinkfrequenz betrieben werden.

10. Verfahren nach Anspruch 9 **dadurch gekennzeichnet, dass** ganze oder Bruchteile von Skalenteilen durch Steuerung der Lichtstärke und/oder Lichtfarbe und/oder Blinkfrequenz der Leuchtmittel (7) dargestellt werden.

11. Verfahren nach Anspruch 9 oder 10, **dadurch gekennzeichnet, dass** als Leuchtmittel (7) Leuchtdioden verwendet werden.
